Europäisches Patentamt

European Patent Office

Office européen des brevets

(19)

(11) Veröffentlichungsnummer: **0 267 588 B1**

(12) **EUROPÄISCHE PATENTSCHRIFT**

(45) Veröffentlichungstag der Patentschrift: 27.02.91

(51) Int. Cl.⁵: **C03C 21/00**, //G02B6/10

(21) Anmeldenummer: **87116607.0**

(22) Anmeldetag: **10.11.87**

(54) **Anordnung zum Haltern eines Glaskörpers.**

(30) Priorität: 13.11.86 DE 3638752

(43) Veröffentlichungstag der Anmeldung:
18.05.88 Patentblatt 88/20

(45) Bekanntmachung des Hinweises auf die
Patenterteilung:
27.02.91 Patentblatt 91/09

(84) Benannte Vertragsstaaten:
DE FR GB

(56) Entgegenhaltungen:
US-A- 3 773 488

ELECTRONICS LETTERS Band 18, Nr.8, 15.
April 1982, London H.J. LILIENHOF et al.:
"Printed geodesic lenses in glass with ionexchanged film waveguides " Seiten 344-345

SPIE, Band 651, Integrated Optical Circuit
Engineering III (1986) Redondo Be-
ach(California) H.W.HOLSCHER et al.: Fabrication of monomode ring couplex by field
enhanced K + -ion-exchange in BK 7 glass"

(73) Patentinhaber: Siemens Aktiengesellschaft
Wittelsbacherplatz 2
D-8000 München 2(DE)

(72) Erfinder: Clemens, Peter, Dipl.-Phys.
Leopoldstrasse 136
D-8000 München 40(DE)

## Beschreibung

Die vorliegende Erfindung betrifft eine Anordnung zum Haltern eines insbesondere plattenförmigen Glaskörpers nach dem Obergriff des Patentanspruchs 1.

Eine Anordnung der genannten Art ist aus Electron. Lett., 15th April 1982, Vol. 18, No. 8, bekannt. Diese Anordnung dient zur Erzeugung einer geodätischen Linse in einem Glassubstrat mit einem durch feldunterstützten Ionenaustausch erzeugten Schichtwellenleiter. Dazu ist das plattenförmige und in einem Preßvorgang lokal gewölbte Glassubstrat mit einer Oberseite an der unterseitigen Dichtfläche des evakuierbaren zylindrischen Behälters für die eine Glasschmelze durch Ansaugen gehalten. Die angesaugte Oberseite des Glassubstrats steht mit der Glasschmelze im Behälter durch die von der Dichtfläche umgebene Kontaktöffnung in Berührung und verhindert gleichzeitig, daß diese Schmelze nach unten ausfließen kann.

Die Unterseite des angesaugten Glassubstrats ist mit der anderen Salzschmelze durch Eintauchen des Substrats in diese Schmelze in Kontakt gebracht. Diese Schmelze befindet sich in dem anderen Behälter, dessen oberseitige Kontaktöffnung so groß ist, daß durch sie das Glassubstrat in den Behälter eingebracht werden kann.

In den Salzschmelzen selbst sind Elektroden angeordnet, die durch elektrische Leitungen mit einem Anoden- und einem Kathodenanschluß verbunden sind. Die elektrische Leitung des evakuierbaren Behälters ist durch eine vakuumdichte elektrische Durchführung von oben in das Innere dieses Behälters geführt.

Eine ähnliche Anordnung geht aus SPIE Vol. 651 Integrated Optical Circuit Engineering III (1986) S. 46-50 hervor.

Eine derartige Anordnung ist jedoch ungeeignet oder problematisch, wenn der auszuübende Anpreßdruck für den betreffenden Glaskörper zu groß ist und beispielsweise zu seiner Verformung oder gar Zerstörung führt. Dies kann beispielsweise bei sehr dünnen plattenförmigen Glaskörpern der Fall sein und/oder wenn der Ionenaustausch bei einer Temperatur oberhalb der Transformationstemperatur $T_g$ (siehe DIN 52 324) des Glases ablaufen soll. Dort führt der relativ hohe Anpreßdruck von typisch 100 bis 1000 mbar zur Zerstörung des Glaskörpers. Andererseits kann aber der Anpreßdruck auch nicht niedriger als etwa 100 mbar gewählt werden, da sonst die Dichtfläche unwirksam würde. Dies hätte das Austreten der Salzschmelze und Kurzschluß zur Folge.

Aufgabe der Erfindung ist es, eine Anordnung der eingangs genannten Art zu schaffen, bei welcher vermieden werden kann, daß ein hoher Anpreßdruck den Glaskörper in Mitleidenschaft zieht oder ihn gar zerstört, insbesondere auch dann, wenn der Glaskörper sehr dünn ist und/oder der Ionenaustausch oberhalb der Transformationstemperatur durchgeführt wird.

Diese Aufgabe wird durch die im kennzeichnenden Teil des Patentanspruchs 1 angegebenen Merkmale gelöst.

Danach ist bei der erfindungsgemäßen Lösung der Glaskörper an beiden Behältern durch Ansaugen gehaltert, wobei zum Ansaugen beide Behälter evakuiert werden.

Dabei ist es zweckmäßig, wenn gemäß Anspruch 2 die Dichtflächen und Kontaktöffnungen beider Behälter einander gegenüberliegend angeordnet sind. Die von den Dichtflächen auf den Glaskörper ausgeübten Drucke können hierbei nicht verbiegend sondern nur komprimierend auf den Glaskörper einwirken, und im Bereich der Kontaktöffnungen wirkt auf den Glaskörper keine oder allenfalls nur eine geringe Druckdifferenz, die durch verschiedene Vakuumdrucke in den Behältern hervorgerufen sein kann.

Eine derartige Druckdifferenz läßt sich jedoch weitestgehend dadurch vermeiden, daß die Behälter an eine gemeinsame Vakuumpumpe angeschlossen sind (Anspruch 3).

Eine bevorzugte Ausführungsvariante der erfindungsgemäßen Anordnung ist gemäß Anspruch 4 gestaltet. Bei dieser Variante kann der plattenförmige Glaskörper wie bisher waagerecht angeordnet sein, wobei durch einen höheren Behälterabschnitt, in dem der Pegel der Salzschmelze höher liegen kann als die Unterseite des Glaskörpers, die Kontaktierung dieser Unterseite sichergestellt ist und der Glaskörper zugleich von dem Gewicht der über ihm liegenden Salzschmelze entlastet sein kann.

Eine andere bevorzugte Ausführungsvariante ist gemäß Anspruch 5 gestaltet. Bei dieser Variante kann der plattenförmige Glaskörper vertikal angeordnet sein, wobei die Kontaktierung mit den Salzschmelzen von der Seite her erfolgt. Diese kann wiederum dadurch sichergestellt werden, daß der Pegel der Salzschmelzen in den Behältern höher liegt als die Kontaktöffnungen der Behälter.

Eine zweckmäßige Ausgestaltung einer erfindungsgemäßen Anordnung, insbesondere der Ausführungsvariante nach Anspruch 4 weist einen Salzbehälter gemäß Anspruch 6 auf.

Dabei ist es bei der Ausführungsvariante nach Anspruch 4 zweckmäßig, wenn wenigstens ein Salzbehälter ein Absperrorgan gemäß Anspruch 7 aufweist. Wird dieses Absperrorgan erst dann geöffnet, wenn die vorgegebene Temperatur, bei welcher der feldunterstützte Ionenaustausch ablaufen soll, erreicht ist, kommt die in diesem Salzbehälter enthaltene Salzschmelze erst zu diesem Zeitpunkt mit dem Glaskörper in Kontakt. Hierdurch wird erreicht, daß dem feldunterstützen Ionenaustausch nicht grundsätzlich ein thermischer Ionenaustausch ab Erreichen des Schmelzpunktes des festen Salzes vorausgeht.

Bevorzugte und vorteilhafte Ausgestaltungen einer Anordnung mit einem derartigen Salzbehälter gehen aus den Ansprüchen 8 bis 11 hervor.

Ein Salzbehälter in einem Salzschmelzebehälter kann auch gemäß Anspruch 12 ausgebildet sein, insbesondere dann, wenn in dem anderen Salzschmelzebehälter ein Salzbehälter nach einem der Ansprüche 7 bis 11 vorhanden ist, mit dem der Zeitpunkt gesteuert werden kann, zudem die Salzschmelze in diesem anderen Salzschmelzebehälter in Kontakt mit dem Glaskörper zu bringen ist. Bevorzugte und vorteilhafte Ausgestaltungen dieses Salzbehälters gehen aus den Ansprüchen 13 und 14 hervor.

Zweckmäßigerweise weist ein Salzbehälter eine Elektrode gemäß Anspruch 15 auf, wobei bevorzugte Ausgestaltungen dieser Ausführungsform aus den Ansprüchen 16 bis 18 hervorgehen.

Eine bevorzugte Ausgestaltung der Ausführungsvariante nach Anspruch 5 ist im Anspruch 19 angegeben und weist bewegliche Tauchelektroden auf. Durch Eintauchen dieser Tauchelektroden in die Salzschmelzen können diese gleichzeitig mit dem Glaskörper in Kontakt gebracht werden.

Eine andere bevorzugte Ausgestaltung der Ausführungsvariante nach Anspruch 5 ist im Anspruch 20 angegeben. Bei dieser Ausgestaltung kann der Glaskörper durch Kippen der Salzschmelzebehälter gleichzeitig in Kontakt mit den Salzschmelzen gebracht werden.

Ein vorteilhaftes Verfahren zum Betrieb einer erfindungsgemäßen Anordnung geht aus Anspruch 21 hervor und ist für die Massenproduktion ionenausgetauschter Wellenleiter oder -strukturen geeignet.

Ausführungsbeispiele der Erfindung werden in der folgenden Beschreibung anhand der Figuren näher erläutert. Von den Figuren, die durchwegs Seitenansichten beispielhafter Anordnungen darstellen, zeigen:

Figur 1 ein Beispiel der Ausführungsvariante, bei welcher ein Salzschmelzebehälter zwei miteinander kommunizierende, ungleich hohe Behälterabschnitte aufweist,

Figur 2 ein Beispiel dieser Ausführungsvariante nach Figur 1, bei welcher in den Salzschmelzebehältern Salzbehälter angeordnet sind, die mit festen Salzen gefüllt sind,

Figur 3 das Beispiel nach Figur 2 nach dem Schmelzen der festen Salze,

Figur 4 ein Beispiel der anderen Ausführungsvariante, bei der die Dichtflächen und Kontaktöffnungen beider Salzschmelzebehälter auf einanderzugekehrten lateralen Seiten ausgebildet sind, wobei in diesen Behältern Tauchelektroden angeordnet und die Behälter mit festen Salzen gefüllt sind,

Figur 5 das Beispiel nach Figur 4 nach dem Schmelzen der Salze und Eintauchen der Tauchelektroden in die Salzschmelzen,

Figur 6 ein anderes Beispiel der anderen Ausführungsvariante, bei welcher die Salzschmelzebehälter um eine waagerechte Achse drehbar und dadurch auf den Kopf stellbar sind, in welcher Stellung diese mit Salzschmelzen gefüllten Behälter in der Figur 6 dargestellt sind, und

Figur 7 das Beispiel nach Figur 6 bei aufrecht gestellten Salzschmelzebehältern.

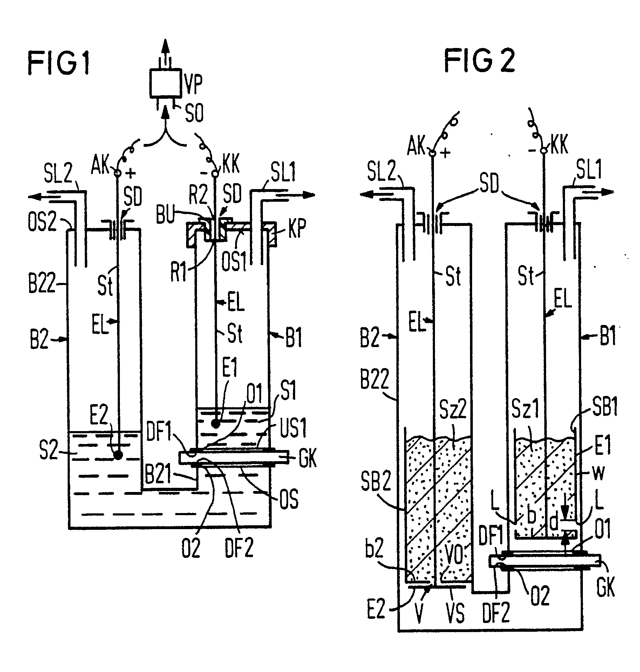

Bei dem Beispiel nach Figur 1 besteht ein Salzschmelzebehälter B1 beispielsweise aus einem abwärts ragenden, auf der Unterseite offenen Rohr aus beispielsweise Quarzglas, dessen unterseitige Stirnfläche plangeschliffen ist und die Dichtfläche DF1 dieses Behälters 1 bildet, welche die untere Öffnung des Rohres umgibt. Diese untere Öffnung bildet die Kontaktöffnung O1 dieses Behälters B1.

Der andere Salzschmelzebehälter B2 ist beispielsweise in Form eines U-förmig gebogenen Rohres aus beispielsweise Quarzglas ausgebildet, das zwei aufwärts ragende ungleich hohe Rohrschenkel aufweist, welche die miteinander kommunizierenden, ungleich hohen Behälterabschnitte B21 und B22 dieses Salzschmelzebehälters bilden. Die Stirnfläche an der Oberseite OS des auf dieser Seite OS offenen niedrigeren Behälterabschnitts B21 ist plangeschliffen und bildet die Dichtfläche DF2 dieses Salzschmelzebehälters B2, welche die oberseitige Öffnung umgibt. Diese Öffnung bildet die Kontaktöffnung O2 dieses Behälters B2.

Der eine Salzschmelzebehälter B1 ist an seiner Oberseite OS1 und der andere Salzschmelzebehälter B2 an der Oberseite OS2 seines höheren Behälterabschnitts B22 vakuumdicht abgeschlossen.

Eine in das Innere des einen Salzschmelzebehälters B1 ragende Saugleitung SL1 und eine in das Innere des anderen Salzschmelzebehälters B2 ragende Saugleitung SL2 sind mit einer Saugöffnung SO einer gemeinsamen Vakuumpumpe VP verbunden.

Im Inneren beider Salzschmelzebehälter B1 und B2 sind jeweils Elektroden E1 bzw. E2 angeordnet. Jede Elektrode E1 und E2 ist mit einem zugeordneten Kontakt KK bzw. AK elektrisch verbunden, der sich außerhalb der Salzschmelzebehälter B1, B2 befindet. Diese elektrische Verbindung ist durch eine elektrische Leitung EL gebildet, die durch eine vakuumdichte elektrische Durchführung SD in das Innere des betreffenden Salzschmelzebehälters B1 bzw. B2 geführt ist.

Beim Beispiel nach Figur 1 ist jede elektrische Leitung EL durch eine bewegbare Stange St aus Metall gebildet und die elektrische Durchführung SD ist als eine vakuumdichte Schiebedurchführung ausgebildet, durch welche die Stange St elektrisch isoliert in das Innere des zugeordneten Salzschmelzebehälters B1 bzw. B2 ragt. Dadurch können die Elektroden E1 und E2 im Inneren der Salzschmelzebehälter B1, B2 und insbesondere in den betreffenden Salzschmelzen S1 bzw. S2 in diesen Behältern verschoben und günstig eingestellt werden.

Ein Beispiel eines vakuumdichten Verschlusses ist in der Figur 1 an der Oberseite OS1 des einen Salzschmelzebehälters B1 schematisch und im Schnitt dargestellt. Dieser Verschluß kann beispielsweise aus einer metallenen Abdeckkappe KP bestehen, die über den betreffenden Behälter oder Behälterabschnitt gestülpt wird und beispielsweise durch einen an sich bekannten Quetschverschluß vakuumdicht mit diesem Behälter oder Behälterabschnitt verbunden werden kann. Durch diese Kappe KP kann die betreffende Saugleitung SL1 in das Innere des betreffenden Behälters geführt sein. Auch die elektrische Durchführung oder Schiebedurchführung SD kann in dieser Kappe KP angeordnet sein. Sie kann beispielsweise durch eine in einer Öffnung der Kappe KP sitzenden Buchse BU aus elektrisch isolierendem Material bestehen, in der ein oder zwei O-Ringe R1 und R2 aus elastischem Material angeordnet sind, durch welche die metallene Stange St geführt ist. Ein derartiger Verschluß oder eine derartige Schiebedurchführung kann für sämtliche Behälter der in den Figuren 1 bis 7 dargestellten Ausführungsbeispiele verwendet werden, so daß dieser Verschluß und/oder diese Schiebedurchführung für den höheren Behälterabschnitt B22 in Figur 1 und die Salzschmelzebehälter in den übrigen Figuren nur noch schematisch dargestellt ist.

In der Figur 1 und in den übrigen Figuren ist beispielhaft angenommen, daß der Kontakt AK ein Anodenkontakt und der Kontakt KK ein Kathodenkontakt ist.

Beim Betrieb der Anordnung nach Figur 1 ist der beispielsweise plattenförmige Glaskörper GK waagerecht zwischen den beiden feingeschliffenen Dichtflächen DF1 und DF2 der beiden evakuierten Salzschmelzebehälter B1 und B2 gehalten. Die zum Evakuieren benutzte gemeinsame Vorpumpe VP sorgt für gleichen Druck in beiden Salzschmelzebehältern. Die in einem Behälter B1 enthaltende Salzschmelze S1 drückt auf die Oberseite des Glaskörpers GK. Da zur Erzielung eines guten Kontakts zwischen der Salzschmelze S2 im anderen Salzschmelzebehälter B2 mit der Unterseite des Glaskörpers GK der Pegel dieser Salzschmelze S2 im höheren Behälterabschnitt B22 höher als die Oberseite OS des niedrigeren Behälterabschnitts B21 gelegt wird, drückt diese Salzschmelze S2 von unten her gegen den Glaskörper GK. Damit unter diesen Bedingungen die beiden Salzschmelzen S1 und S2 nicht auslaufen, muß der Anpreßdruck an den Dichtflächen DF1 und DF2 100-1000 mbar betragen. Dieser Druck wirkt aber nur noch an der Stelle der Dichtflächen und nicht wie bisher über die gesamte Fläche der Kontaktöffnungen. Deshalb kann der feldunterstützte Ionenaustausch auch oberhalb der Transformationstemperatur Tg an einem plattenförmigen, beidseitig polierten Glaskörper durchgeführt werden.

Zur Erzielung des genannten Anpreßdrucks reicht eine Vorpumpe als Vakuumpumpe VP aus.

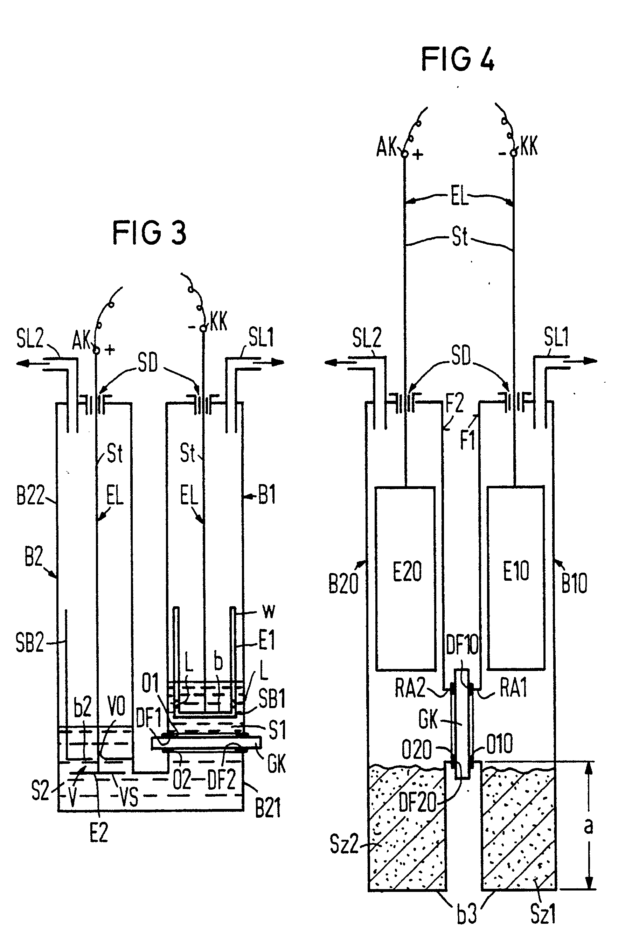

Das Ausführungsbeispiel nach den Figuren 2 und 3 unterscheidet sich von dem Beispiel nach Figur 1 lediglich durch die Anordnung von Salzbehältern SB1 und SB2 in den Salzschmelzebehältern B1 bzw. B2 und durch die spezielle Ausbildung der Elektroden E1 und E2. Die Figur 2 zeigt die Anordnung im kalten Zustand, während die Figur 3 diese Anordnung im erhitzten Zustand zeigt.

Der becherförmige Salzbehälter SB1 in dem einen Salzschmelzebehälter B1 besteht aus Metall und ist am Boden b mit einer Stange St verbunden. Er bildet somit zugleich die Elektrode E1 in diesem Salzschmelzebehälter B1. Er weist in seiner Umfangswand w in der Nähe seines Bodens b ausgebildete Löcher L auf, durch die zwar die Salzschmelze S1, nicht wesentlich aber das im kalten Zustand in den Salzbehälter gefüllte feste Salz Sz1 austritt. Der Durchmesser d der Löcher L kann beispielsweise etwa 2 mm betragen.

Der Salzbehälter SB2 im anderen Salzschmelzebehälter B2 ist zweckmäßigerweise im höheren Behälterabschnitt B22 angeordnet und weist in seinem Boden b2 ein Ventil mit einer Ventilöffnung VO in diesem Boden b2 und einem Ventilverschlußstück VS zum Absperren der Ventilöffnung VO auf. Das Ventilverschlußstück VS besteht beispielsweise aus Metall und ist mit der metallenen Stange St verbunden, durch die es zum Absperren und Öffnen des Ventils von außen wahlweise hin- und herbewegt werden kann. Zugleich bildet dieses Ventilverschlußstück VS die Elektrode E2 in dem anderen Salzschmelzebehälter B2. Der Salzschmelzebehälter SB2 kann in dem höheren Behälterabschnitt B22 fixiert sein und beispielsweise lediglich aus einer den Behälterboden b2 bildenden und eine Öffnung VO aufweisenden Quertrennwand im höheren Behälterabschnitt B22 bestehen, die aus dem gleichen Material wie dieser sein kann.

Das Füllen der Salzbehälter SB1 und SB2 mit festen Salzen Sz1 und Sz2 erfolgt im kalten Zustand der Anordnung. Da der Salzbehälter SB1 das eingefüllte feste Salz Sz1 zurückhält, kann der Glaskörper GK problemlos an die Dichtfläche DF1 angesaugt werden. Das Füllen des anderen Salzbehälters SB2 mit dem festen Salz Sz2, welches das Austauschion enthält, erfolgt bei abgesperrtem Ventil V, so daß auch aus diesem Salzbehälter das feste Salz nicht austreten kann.

Nachdem beide Salzschmelzebehälter B1 und B2 am Glaskörper GK festgesaugt sind, befindet sich die Anordnung in dem in Figur 2 gezeigten Zustand. Nun werden die festen Salze Sz1 und Sz2 durch Erhitzen geschmolzen. Die im Salzbehälter SB1 entstehende Salzschmelze S1 tritt durch die Löcher L in den Salzsohmelzebehälter B2 aus und gelangt in Kontakt mit dem Glaskörper GK. Die im anderen Salzbehälter SB2 entstehende Salzschmelze Sz2 bleibt wegen des abgesperrten Ventils V in diesem Behälter.

Erst wenn die vorgegebene Temperatur, bei welcher der feldunterstützte Ionenaustausch erfolgen soll, erreicht ist, wird das Ventil V geöffnet, so daß die Salzschmelze S2 in den anderen Salzschmelzebehälter B2 austritt und in Kontakt mit dem Glaskörper GK kommt, wie es in der Figur 3 dargestellt ist. Hierdurch wird erreicht, daß dem feldunterstützten Ionenaustausch nicht grundsätzlich ein thermischer Ionenaustausch ab Erreichen des Schmelzpunktes des festen Salzes Sz2 vorausgeht.

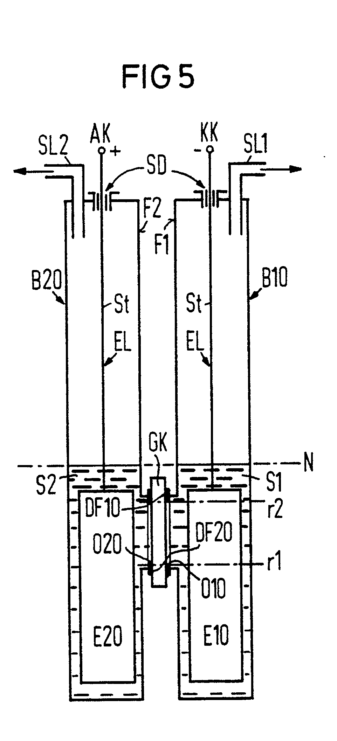

Bei dem Ausführungsbeispiel nach den Figuren 4 und 5 bestehen die beiden Salzschmelzebehälter B10 und B20 aus zwei vertikalen Rohren aus beispielsweise Quarzglas, die an der Unterseite und Oberseite vakuumdicht verschlossen sind. Die Dichtflächen DF10 und DF20 sowie die von diesen Dichtflächen umgebenen Kontaktöffnungen O10 und O20 sind auf einander gegenüberliegenden Längsseiten F1 und F2 der Rohre ausgebildet. Dazu weist jeder Salzschmelzebehälter B10 und B20 einen kurzen offenen Rohransatz RA1 bzw. RA2 auf, dessen feingeschliffene Stirnfläche die Dichtfläche DF10 bzw. DF20 bildet.

Die Dichtflächen DF10 und DF20 sind in einem Abstand a vom Boden b3 der Salzschmelzebehälter B10 und B20 angeordnet, so daß unterhalb dieser Dichtflächen liegende Abschnitte der Salzschmelzebehälter vorhanden sind, die mit festem Salz Sz1 bzw. Sz2 gefüllt werden können.

Außerdem sind in den Salzschmelzebehälter B10 und B20 vertikal bewegliche blockförmige Tauchelektroden E10 und E20 angeordnet. Diese Elektroden sind durch vertikal bewegliche metallene Stangen St mit den Kontakten KK bzw. AK verbunden. Diese Stangen St bilden auf diese Weise auch elektrische Leitungen EL zu den betreffenden Tauchelektroden und ragen durch vakuumdichte Schiebedurchführunge SD in das Innere der betreffenden Salzschmelzebehälter.

Nachdem im kalten Zustand der Anordnung die unterhalb der Dichtflächen DF10 und DF20 befindlichen Abschnitte der beiden Salzschmelzebehälter B10 und B20 mit zugeordnetem festem Salz Sz1 bzw. Sz2 gefüllt worden sind, werden die Dichtflächen DF10 und DF20 auf beiden Seiten des beispielsweise plattenförmigen und vertikal angeordneten Glaskörpers GK festgesaugt, so daß der in Figur 4 gezeigte Zustand der Anordnung gegeben ist, bei dem die Tauchelektroden E10 und E20 über den festen Salzen angeordnet sind.

Durch Erhitzen werden die festen Salze Sz1 und Sz2 geschmolzen, wobei der Pegel der entstehenden Salzschmelzen S1 und S2 unter halb der Dichtflächen DF10 und DF20 und damit unterhalb einer unteren Begrenzung r1 der Kontaktöffnungen O10 und O20 bleibt.

Sobald die vorgegebene Temperatur, bei welcher der Ionenaustausch ablaufen soll, erreicht ist, werden die beiden Tauchelektroden E10 und E20 gleichzeitig in die Salzschmelzen S1 und S2 eingetaucht, so daß der Pegel N der Salzschmelzen ansteigt. Die Tauchelektroden E10 und E20 sind volumenmäßig so bemessen, daß bei ihrem Eintauchen in die Salzschmelzen der Pegel N so weit ansteigt, daß der Glaskörper GK von beiden Seiten in Kontakt mit diesen Schmelzen kommt. Insbesondere sind sie so bemessen, daß der Pegel N auf eine obere Begrenzung r2 der Kontaktöffnungen O10 und O20 oder darüber hinaus ansteigt, so wie es in der Figur 5 dargestellt ist.

Auch auf diese Weise kann der feldunterstütze Ionenaustausch beginnen, ohne daß ein unerwünschter thermischer Ionenaustausch vorausgegangen ist.

Nach Beendigung des Ionenaustausches können die beiden Elektroden angehoben werden, wodurch die beiden Salzschmelzen S1 und S2 wieder in die unterhalb der Dichtflächen DF10 und DF20 liegenden Behälterabschnitte zurücktreten. Danach kann das Innere der beiden evakuierten Salzschmelzebehälter B1 und B2 auf Umgebungsdruck, beispielsweise Atmosphärendruck, gebracht und der Glaskörper GK aus der Halterung genommen werden.

Da die zurückgetretenen Salzschmelzen S1 und S2 noch für weitere Ionenaustauschprozesse an nachfolgenden Glaskörpern bzw. -proben zur Verfügung stehen, eignet sich die Anordnung nach den Figuren 4 und 5 vorteilhaft für die Massenproduktion, beispielsweise von mittels Ionenaustauschverfahren hergestellten Wellenleitern oder Wellenleiterstrukturen.

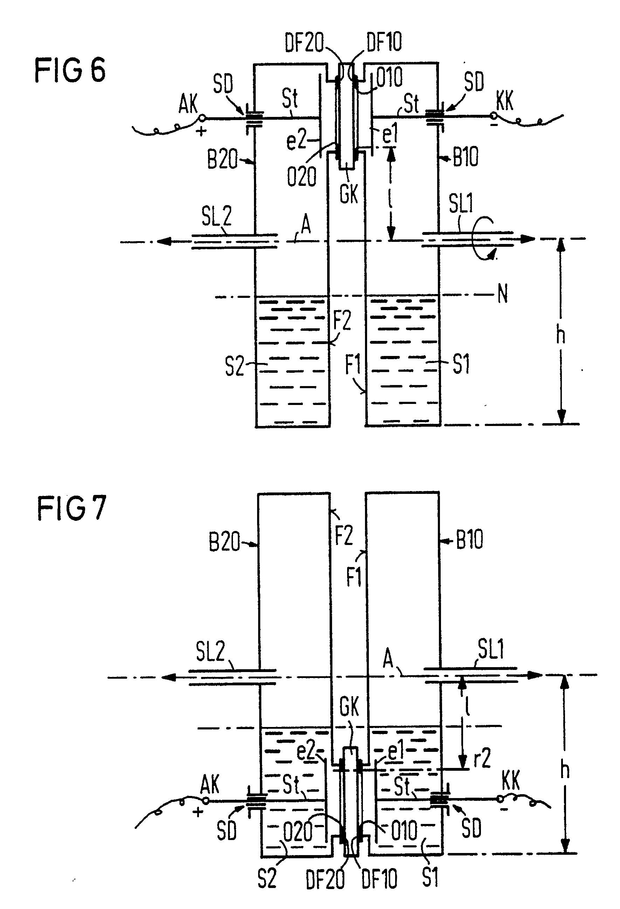

Dies gilt auch für die Anordnung nach den Figuren 6 und 7. Diese Anordnung unterscheidet sich von der Anordnung nach den Figuren 4 und 5 im wesentlichen dadurch, daß die beiden Salzschmelzebehälter B10, B20 um eine waagerechte Drehachse A aus einer in der Figur 7 gezeigten aufrechten Arbeitsstellung um 180° in eine in der Figur 6 gezeigten Kopfstellung gedreht werden können. Außerdem sind die Kontaktöffnungen 010 und 020 der Salzschmelzebehälter B10, B20 mit einem Abstand l von der halben Höhe h der Salzschmelzebehälter B10 und B20 angeordnet und der Pegel N der Salzschmelzen S1 und S2 in den Salzschmelzebehältern B10 und B20 ist so eingestellt, daß er in der Arbeitsstellung mindestens auf der Höhe h - l und höchstens auf der Höhe h + l liegt.

In der Stellung nach Figur 6 werden die mit festen Salzen gefüllten Salzschmelzebehälter B10 und B20 an dem Glaskörper GK festgesaugt. Nachdem durch Erhitzen der festen Salze die Salzschmelzen S12 und S2 erzeugt worden sind, wird beim Erreichen der vorgegebenen Temperatur, bei welcher der feldunterstützte Ionenaustausch ablaufen soll, die Anordnung um 180° in die Arbeitsstellung nach Figur 7 gedreht. Dadurch kommen wie bei der Anordnung nach den Figuren 4 und 5 beide Seiten des Glaskörpers GK gleichzeitig in Kontakt mit diesen Salzschmelzen, wonach der feldunterstützte Ionenaustausch beginnen kann, ohne daß ein unerwünschter thermischer Ionenaustausch vorausgegangen ist.

Die oben definierte Einstellung des Pegels N stellt sicher, daß in der Arbeitsstellung die Kontaktöffnungen O10 und O20 ganz in die Salzschmelzen eingetaucht sind, während sie in der Stellung in der Figur 6 nicht mit diesen Schmelzen in Kontakt stehen.

Auch brauchen die Elektroden e1 und e2 nicht als großvolumige Tauchelektroden, wie bei der Anordnung nach den Figure 4 und 5 ausgebildet sein. Die Elektroden e1 und e2 können auch horizontal verschiebbar angeordnet sein, so wie es in den Figuren 6 und 7 dargestellt ist. Horizontal verschiebbare Elektroden sind für diese Anordnung günstiger. Wie die vertikal verschiebbaren Elektroden können auch die horizontal verschiebbaren Elektroden e1 und e2 durch horizontal bewegliche metallene Stangen St mit den Kontakten AK und KK verbunden sein, wobei die Stangen durch vakuumdichte Schiebedurchfuhrungen SD in das Innere der Salzschmelzebehälter B10 und B20 ragen.

Die Saugleitungen SL1 und SL2 sind vorteilhafterweise koaxial zur Drehachse A angeordnet.

Bei der Ausführung nach den Figuren 4 und 5 können auch Salzbehälter, insbesondere Salzbehälter mit Absperrorgan, entsprechend der Ausführungsform nach den Figuren 2 und 3 verwendet werden.

Bei sämtlichen dargestellten und vorstehend beschriebenen Ausführungsbeispielen bildet die Schiebedurchführung SD sowohl die elektrische als auch die mechanische Durchführung. Elektrische und mechanische Durchführung könnten aber auch voneinander getrennt realisiert sein.

## Ansprüche

1. Anordnung zum Haltern eines Glaskörpers (GK) für einen feldunterstützten Ionenaustausch mit anodischer und kathodischer Kontaktierung durch Salzschmelzen (S1, S2), wobei der Glaskörper (GK) zwischen zwei die beiden Salzschmelzen (S1, S2) enthaltenden Salzschmelzebehältern (B1, B2; B10, B20) angeordnet ist, durch in den Salzschmelzebehältern (B1, B2; B10, B20) ausgebildeten Kontaktöffnungen (01, 02; 010, 020) in Kontakt mit den Salzschmelzen (S1, S2) steht und an einer Dichtfläche (DF1 oder DF2; DF10 oder DF20) eines (B1 oder B2; B10 oder B20) der Salzschmelzebehälter (B1, B2; B10, B20), der als evakuierbarer Behälter ausgebildet ist, durch Ansaugen gehaltert ist, **dadurch gekennzeichnet,** daß auch der andere Salzschmelzebehälter (B2 bzw. B1; B20 bzw. B10) als evakuierbarer Behälter ausgebildet ist und eine Dichtfläche (DF2 bzw. DF1; DF20 bzw. DF10) aufweist, und daß der Glaskörper (GK) auch an dieser Dichtfläche (DF2 bzw. DF1; DF20 bzw. DF10) durch Ansaugen gehaltert ist.

2. Anordnung nach Anspruch 1, **dadurch gekennzeichnet,** daß die Dichtflächen (DF1, DF2; DF10, DF20) und Kontaktöffnungen (01, 02; 010, 020) beider Salzschmelzebehälter (B1, B2; B10, B20) einander gegenüberliegend angeordnet sind.

3. Anordnung nach Anspruch 1 oder 2, **dadurch gekennzeichnet,** daß beide Salzschmelzebehälter (B1, B2; B10, B20) an eine gemeinsamen Vakuumpumpe (VP) angeschlossen sind.

4. Anordnung nach einem der Ansprüche 1 bis 3, **dadurch gekennzeichnet,** daß die Dichtfläche (DF1) und Kontaktöffnung (01) eines Salzschmelzebehälters (B1) auf einer Unterseite (US) dieses Behälters (B1) ausgebildet sind, daß der andere Salzschmelzebehälter (B2) zwei kommunizierende, ungleich hohe Behälterabschnitte (B21, B22) aufweist, und daß die Dicht fläche (DF2) und die Kontaktöffnung (02) dieses anderen Salzschmelzebehälters (B2) auf einer Oberseite (OS) des niedrigeren Behälterabschnitts (B21) ausgebildet sind.

5. Anordnung nach einem der Ansprüche 1 bis 3, **dadurch gekennzeichnet,** daß die Dichtflächen (DF10, DF20) und Kontaktöffnungen (010, 020) beider Salzschmelzebehälter (B10, B20) auf einanderzugekehrten lateralen Seiten (F1, F2) dieser Behälter (B10, B20) ausgebildet sind.

6. Anordnung nach einem der vorhergehenden Ansprüche, insbesondere nach Anspruch 4, **dadurch gekennzeichnet,** daß in zumindest einem Salzschmelzebehälter (B1, B2) ein mit festem Salz (Sz1, Sz2) zur Erzeugung der Salzschmelze (Sz1, Sz2) in diesem Salzschmelzebehälter (B1, B2) füllbarer Salzbehälter SB1, SB2) angeordnet ist, der so ausgebildet ist, daß aus ihm zwar die Salzschmelze (S1, S2), nicht wesentlich aber das feste Salz (Sz1, Sz2) austritt.

7. Anordnung nach Anspruch 4 und 6, **dadurch gekennzeichnet,** daß in zumindest einem (B2) der beiden Salzschmelzebehälter (B1, B2) ein Salzbehälter (SB2) mit einem Absperrorgan (V) angeordnet ist, das von außen wahlweise geöffnet oder abgesperrt werden kann, wobei die in diesem Salzbehälter (SB2) erzeugte Salzschmelze (Sz2) aus dem geöffneten Absperrorgan (V) in den Salzschmelzebehälter (B2) austritt.

8. Anordnung nach Anspruch 7, **dadurch gekennzeichnet,** daß das Absperrorgan (V) im Boden (b2) des Salzbehälters (SB2) angeordnet ist.

9. Anordnung nach Anspruch 7 oder 8, **dadurch gekennzeichnet,** daß das Absperrorgan (V) durch eine bewegbare Stange (St) geöffnet und abgesperrt werden kann, die durch eine vakuumdichte Schiebedurchführung (SD) in das Innere des Salzschmelzebehälters (B2) ragt.

10. Anordnung nach Anspruch 8, **dadurch gekennzeichnet,** daß die Stange (St) an einem relativ zum Salzbehälter (SB2) bewegbaren Verschlußstück (VS) des Absperrorgans (V) angreift.

11. Anordnung nach Anspruch 10, **dadurch gekennzeichnet,** daß die Stange (St) von oben in das Innere des Salzschmelzebehälters (B2) ragt.

12. Anordnung nach einem der Ansprüche 6 bis 11, insbesondere nach einem der Ansprüche 7 bis 11, **dadurch gekennzeichnet,** daß in einem Salzschmelzebehälter (B1) ein Salzbehälter (SB1) angeordnet ist, der in seiner Wandung eine oder mehrere unverschlossene Austrittsöffnungen (L) aufweist, die so bemessen sind, daß durch sie zwar die in ihm erzeugte Salzschmelze (S1), nicht wesentlich aber das in ihm enthaltene feste Salz (Sz1) in diesen Salzschmelzebehälter (B1) austreten kann.

13. Anordnung nach Anspruch 12, **dadurch gekennzeichnet,** daß die Austrittsöffnungen (L) in einer Seitenwand (w) des Salzbehälters (SB1) in der Nähe seines Bodens (b) ausgebildet sind.

14. Anordnung nach Anspruch 12 oder 13, **dadurch gekennzeichnet,** daß der Durchmesser (d) einer Austrittsöffnung (L) etwa 2 mm beträgt.

15. Anordnung nach einem der Ansprüche 6 bis 14, **dadurch gekennzeichnet,** daß zumindest ein Salzbehälters (SB1, SB2) eine Elektrode (E1, E2) aufweist, die durch eine elektrische Leitung (EL) an einen außerhalb der Salzschmelzebehälter (B1, B2) befindlichen Anoden- oder Kathodenkontakt (AK, KK) angeschlossen ist, wobei die elektrische Leitung (EL) durch eine vakuumdichte elektrische Durchführung (SD) in das Innere des zugeordneten Salzschmelzebehälters (B1, B2) ragt, in dem sich dieser Salzbehälter (B1, B2) befindet.

16. Anordnung nach Anspruch 15, **dadurch gekennzeichnet,** daß die elektrische Leitung (EL) aus einer elektrisch isoliert durch eine vakuumdichte Schiebedurchführung (SD) in das Innere des zugeordneten Salzschmelzebehälters (B1, B2) ragenden bewegbaren Stange (St) aus elektrisch leitendem Material besteht, mit welcher die bewegbare Elektrode (E1, E2) verschiebbar ist.

17. Anordnung nach einem der Ansprüche 7 bis 11 und Anspruch 15 oder 16, **dadurch gekennzeichnet,** daß zumindest das Verschlußstück (VS) des Absperrorgans (V) des Salzbehälters (SB2) aus elektrisch leitendem Material besteht, und eine diesem Salzbehälter (SB2) zugeordnete Elektrode (E2) bildet.

18. Anordnung nach einem der Ansprüche 12 bis 14 und einem der Ansprüche 15 bis 17, dadurch gekennzeichnet, daß der die Auslaßöffnungen (L) aufweisende Salzbehälter (SB1) aus elektrisch leitendem Material besteht und selbst eine Elektrode (E1) bildet.

19. Anordnung nach Anspruch 5, **dadurch gekennzeichnet,** daß in den beiden Salzschmelzebehältern (B10, B20) vertikal bewegbare Tauchelektroden (E10, E20) angeordnet sind, die volumenmäßig so bemessen sind, daß bei jedem Eintauchen in die Salzschmelzen (S1, S2) deren Pegel (N) von einer unteren Begrenzung (r1) der Kontaktöffnungen (010, 020) oder darunter auf eine obere Begrenzung (r2) dieser Öffnungen (010, 020) oder darüber hinaus ansteigt.

20. Anordnung nach Anspruch 5 oder 19, **dadurch gekennzeichnet,** daß die Kontaktöffnungen 010, 020) der Salzschmelzebehälter (B10, B20) mit einem Abstand (l) von der halben Höhe (h) der Salzschmelzebehälter (B10, B20) angeordnet sind, daß die Salzschmelzebehälter (B10, B20) vertikal um etwa 180° verdrehbar sind und daß der Pegel (N) der Salzschmelzen (S1, S2) in den Salzschmelzebehältern (B10, B20) mindestens auf der halben Höhe (h) abzüglich des Abstandes (l) und höchstens auf der halben Höhe (h) abzüglich dieses Abstandes (l) liegt.

21. Verfahren zum Betrieb einer Anordnung nach einem der vorhergehenden Ansprüche, insbesondere nach Anspruch 19 oder 20, **dadurch gekennzeichnet,** daß nach Durchführung eines Ionenaustauschverfahrens an einem Glaskörper (GK) die dazu verwendeten Salzschmelzen (S1, S2) für ein nächstes Ionenaustauschverfahren an einem anderen Glaskörper verwendet werden.

**Claims**

1. Arrangement for holding a glass body (GK) for a field-aided ion exchange with anodic and cathodic contacting by salt melts (S1, S2), the glass body (GK) being arranged between two salt-melt vessels (B1, B2; B10, B20) containing the two salt melts (S1, S2), being in contact with the salt melts (S1, S2) by means of contact openings (01, 02; 010, 020) constructed in the salt-melt vessels (B1, B2; B10, B20), and being held by suction on a sealing surface (DF1 or DF2; DF10 or DF20) of one (B1 or B2; B10 or B20) of the salt-melt vessels (B1, B2; B10, B20), which is constructed as an evacuable vessel, characterized in that the other salt-melt vessel (B2 or B1; B20 or B10) is also constructed as an evacuable vessel, and has a sealing surface (DF2 or DF1; DF20 or DF10), and in that the glass body (GK) is also held on this sealing surface (DF2 or DF1; DF20 or DF10), by suction.

2. Arrangement according to Claim 1, characterized in that the sealing surfaces (DF1, DF2; DF10, DF20) and contact openings (01, 02; 010, 020) of the two salt-melt vessels (B1, B2; B10, B20) are arranged opposite one another.

3. Arrangement according to Claim 1 or 2, characterized in that two salt-melt vessels (B1, B2; B10, B20) are connected to a common vacuum pump (VP).

4. Arrangement according to one of Claims 1 to 3, characterized in that the sealing surface (DF1) and contact opening (01) of one salt-melt vessel (B1) are formed on a bottom end (US) of this vessel (B1), in that the other salt-melt vessel (B2) has two communicating vessel sections (B21, 022) of different heights, and in that the sealing surface (DF2) and the contact opening (02) of this other salt-melt vessel (B2) are formed on an upper end (OS) of the lower vessel section (B21).

5. Arrangement according to one of Claims 1 to 3, characterized in that the sealing surfaces (DF10, DF20) and contact openings (010, 020) of the two salt-melt vessels (B10, B20) are formed on mutually facing lateral sides (F1, F2) of said vessels (B10, B20).

6. Arrangement according to one of the preceding claims, in particular according to Claim 4, characterized in that in at least one salt-melt vessel (B1, B2) a salt container (SB1, SB2) that can be filled with solid salt (Sz1, Sz2) in order to produce the salt melt (Sz1, Sz2) in said salt-melt vessel (B1, B2) is arranged which is so formed that although the salt melt (S1, S2) emerges from it, the solid salt (Sz1, Sz2) essentially does not.

7. Arrangement according to Claims 4 and 6, characterized in that in at least one (B2) of the two salt-melt vessels (B1, B2) a salt container (SB2) is arranged with a shut-off element (V) which can be optionally opened or shut off from outside, the salt melt (Sz2) produced in this salt container (SB2) emerging from the opened shut-off element (V) into the salt-melt vessel (B2).

8. Arrangement according to Claim 7, characterized in that the shut-off element (V) is arranged in the base (B2) of the salt container (SB2).

9. Arrangement according to Claim 7 or 8, characterized in that the shut-off element (V) can be opened and shut off by means of a movable rod (St), which projects through a vacuum-tight sliding lead-through (SD) into the interior of the salt-melt vessel (B2).

10. Arrangement according to Claim 8, characterized in that the rod (St) engages at a closure member (VS), movable relative to the salt container (SB2), of the shut-off element (V).

11. Arrangement according to Claim 10, characterized in that the rod (St) projects from above into the interior of the salt-melt vessel (B2).

12. Arrangement according to one of Claims 6 to 11, in particular according to one of Claims 7 to 11, characterized in that a salt container (SB1) is arranged in one salt-melt vessel (B1), which salt container has one or more unclosed exit openings (L) in its wall, which are dimensioned such that although the salt melt (S1) produced in it can emerge through them, the solid salt (Sz1) contained in it essentially cannot emerge into said salt-melt vessel (B1).

13. Arrangement according to Claim 12, characterized in that the exit openings (L) are formed in a side wall (w) of the salt container (SB1) in the vicinity of its base (b).

14. Arrangement according to Claim 12 or 13, characterized in that the diameter (d) of an outer opening (L) amounts to approximately 2 mm.

15. Arrangement according to one of Claims 6 to 14, characterized in that at least one salt container (SB1, SB2) has an electrode (E1, E2), which is connected by means of an electrical line (EL) to an anode or cathode contact (AK, KK) located outside the salt-melt vessel (B1, B2), the electrical line (EL) projecting through a vacuum-tight electrical lead-through (SD) into the interior of the allocated salt-melt vessel (B1, B2) in which said salt container (B1, B2) is located.

16. Arrangement according to Claim 15, characterized in that the electrical line (EL) consists of an electrically insulated movable rod (St) of electrically conductive material projecting through a vacuum-tight sliding lead-through (SD) into the interior of the allocated salt-melt vessel (B1, B2), with which rod the movable electrode (E1, E2) can be displaced.

17. Arrangement according to one of Claims 7 to 11, and Claim 15 or 16, characterized in that at least the closure member (VS) of the shut-off element (V) of the salt container (SB2) consists of electrically conductive material, and forms an electrode (E2) allocated to said salt container (SB2).

18. Arrangement according to one of Claims 12 to 14, and one of Claims 15 to 17, characterized in that the salt container (SB1) containing the exit openings (L) consists of electrically conductive material and itself forms an electrode (E1).

19. Arrangement according to Claim 5, characterized in that in the two salt-melt vessels (B10, B20) vertically movable dipped electrodes (E10, E20) are arranged which are dimensioned in volume such that with each immersion in the salt melts (S1, S2) the level thereof (N) rises from a lower limit (r1) of the contact openings (010, 020) or therebelow to an upper limit (r2) of said openings (010, 020) or thereabove.

20. Arrangement according to Claim 5 or 19, characterized in that the contact openings (010, 020) of the salt-melt vessels (B10, B20) are arranged at a distance (1) of half the height (h) of the salt-melt vessels (B10 or B20), is that the salt-melt vessels (B10, B20) are vertically rotatable by approximately 180°, and in that the level (N) of the salt melts (S1, S2) in the salt-melt vessels (B10, B20) is at least at half the height (h) minus the distance (1) and at most at half the height (h) minus said distance (1).

21. Method of operating an arrangement according to one of the preceding claims, in particular according to Claim 19 or 20, characterized in that after an ion exchange process has been carried out on a glass body (GK) the salt melts (S1, S2) used for this purpose are used for a following ion exchange process on another glass body.

**Revendications**

1. Dispositif de support d'un corps en verre (GK) pour un échange d'ions assisté par un champ, avec contact anodique et cathodique par des sels fondus (S1, S2), le corps en verre (GK) étant disposé entre deux cuves de sel fondu (B1, B2 ; B10, B20) contenant les deux sels fondus (S1, S2), étant en contact avec les sels fondus (S1, S2) par des ouvertures de contact (01, 02 ; 010, 020) ménagées dans les cuves de sel fondu (B1, B2 ; B10, B20) et étant maintenu par aspiration sur une surface d'étanchéité (DF1 ou DF2 ; DF10 ou DF20) de l'une (B1 ou B2 ; B10 ou B20) des cuves de sel fondu (B1, B2 ; B10, B20) constituées sous la forme de cuves pouvant être mises sous vide, caractérisé en ce que l'autre cuve de sel fondu (B2 ou B1 ; B20 ou B10) est également constituée sous la forme d'une cuve pouvant être mise sous vide, et comporte une surface d'étanchéité (DF2 ou DF1; DF20 ou DF10), et en ce que le corps en verre (GK) est maintenu par aspiration également sur cette surface d'étanchéité (DF2 ou DF1 ; DF20 ou DF10).

2. Dispositif suivant la revendication 1, caractérisé en ce que les surfaces d'étanchéité (DF1, DF2 ; DF10, DF20) et les ouvertures de contact (01, 02 ; 010, 020) des deux cuves de sel fondu (B1, 02 ; B10, B20) sont disposées en face les unes des autres.

3. Dispositif suivant la revendication 1 ou 2, caractérisé en ce que les deux cuves de sel fondu B1, B2 ; B10, B20) sont reliées à une pompe à vide (VP) commune.

4. Dispositif suivant l'une des revendications 1 à 3, caractérisé en ce que la surface d'étanchéité (DF1) et l'ouverture de contact (01) d'une cuve de sel fondu (B1) sont ménagées sur un côté inférieur (US) de cette cuve (B1), en ce que l'autre cuve de sel fondu (B2) comporte deux parties de cuve communicantes de hauteur inégale, et en ce que la surface d'étanchéité (DF2) et l'ouverture de contact (02) de cette autre cuve de sel fondu (B2) sont ménagées du côté supérieur (OS) de la partie la plus basse (B21) de la cuve.

5. Dispositif suivant l'une des revendications 1 à 3, caractérisé en ce que les surfaces d'étanchéité (DF10, DF20) et les ouvertures de contact (010, 020) des deux cuves de sel fondu B10, B20) sont constituées sur des côtés latéraux (F1, F2) tournés l'un vers l'autre de ces cuves (B10, B20).

6. Dispositif suivant l'une des revendications précédentes, notamment suivant la revendication 4, caractérisé en ce que, dans au moins l'une des cuves de sel fondu (B1, B2) est montée une cuve de sel (SB1, SB2) pouvant être emplie de sel solide (Sz1, Sz2) Pour produire les sels fondus (S1, S2) dans cette cuve de sel fondu (B1, B2), cette cuve de sel (SB1, SB2) étant constituée de façon que le sel fondu (S1, S2) puisse, certes, en sortir, mais que le sel solide (Sz1, Sz2) ne le puisse pratiquement pas.

7. Dispositif suivant la revendication 4 et 6, caractérisé en ce que dans au moins une des deux cuves de sel fondu (B1, B2) est montée une cuve de sel (SB2) ayant un organe d'arrêt (V), qui peut être ouvert ou fermé à volonté de l'extérieur, le sel fondu (Sz2) produit dans cette cuve de sel (SB2) sortant, par l'organe d'arrêt (V) ouvert, dans la cuve de sel fondu (B2).

8. Dispositif suivant la revendication 7, caractérisé en ce que l'organe d'arrêt (V) est monté au fond (b2) de la cuve de sel (SB2).

9. Dispositif suivant la revendication 7 ou 8, caractérisé en ce que l'organe d'arrêt (V) peut être ouvert et fermé par une tige (St) mobile qui pénètre, par une traversée à mouvement rectiligne (SD) étanche au vide, à 1'intérieur de la cuve de sel fondu (B2).

10. Dispositif suivant la revendication 8, caractérisé en ce que la tige (St) attaque un obturateur (VS) de l'organe d'arrêt qui est mobile par rapport à la cuve de sel (SB2).

11. Dispositif suivant la revendication 10, caractérisé en ce que la tige (St) pénètre par le haut à l'intérieur de la cuve de se] fondu (B2).

12. Dispositif suivant l'une des revendications 6 à 11, notamment suivant l'une des revendications 7 à 11, caractérisé en ce que, dans une cuve de sel fondu (B1) est disposée une cuve de sel (SB1), dont la paroi comporte une ou plusieurs orifices de sortie (L) qui ne sont pas fermés et qui ont des dimensions telles que du sel fondu (S1) qui y est produit peut en sortir, mais que le sel solide (Sz1) qui y est contenu ne peut pratiquement pas en sortir pour aller dans cette cuve de sel fondu (B1).

13. Dispositif suivait la revendication 12, caractérisé en ce que les orifices de sortie sont ménagés dans une paroi latérale (w) de la cuve de sel (SB1), à proximité de son fond (b).

14. Dispositif suivant la revendication 12 ou 13, caractérisé en ce que le diamètre (d) d'un orifice de sortie (L) est de 2 mm environ.

15. Dispositif suivant l'une des revendications 6 à 14, caractérisé en ce qu'au moins une cuve de sel (SB1, SB2) comporte une électrode (E1, E2) qui est reliée, par un conducteur électrique (EL), à un contact anodique (AK) ou cathodique (KK) se trouvant à l'extérieur de la cuve de sel fondu (B1, B2), le conducteur électrique (EL) pénétrant, par une traversée électrique (SD) étanche au vide, à l'intérieur de la cuve de sel fondu (B1, B2) associée dans laquelle se trouve cette cuve de sel (B1, B2).

16. Dispositif suivant la revendication 15, caractérisé en ce que le conducteur électrique (EL) est constitué d'une tige mobile (St), en un matériau électriquement conducteur, qui est isolée électriquement par une traversée à mouvement rectiligne (SD) étanche au vide et qui pénètre à l'intérieur de la cuve de sel fondu (B1, B2) associée, l'électrode mobile (E1, E2) pouvant être déplacée grâce à cette tige.

17. Dispositif suivant l'une des revendications 7 à 11 et suivant la revendication 15 ou 16, caractérisé en ce qu'au moins l'obturateur (VS) de l'organe d'arrêt (V) de la cuve de sel (SB2) est en un matériau conducteur de l'électricité et forme une électrode (E2) associée à cette cuve de sel (SB2).

18. Dispositif suivant l'une des revendications 12 à 14 et l'une des revendications 15 à 17, caractérisé en ce que la cuve de sel (SB1) comportant les orifices de sortie (L) est en un matériau conducteur de l'électricité et forme elle-même une électrode (E1).

19. Dispositif suivant la revendication 5, caractérisé en ce que, dans les deux cuves de sel fondu (B10, B20) sont disposées des électrodes plongeantes (E10, E20) mobiles verticalement, dont le volume est tel qu'à chaque plongée dans les sels fondus (S1, S2), le niveau (N) de ceux-ci passe d'une limite inférieure (r1) des ouvertures de contact (010, 020) ou d'un niveau inférieur à cette valeur à une limite supérieure (r2) de ces ouvertures (010, 020) ou au-delà.

20. Dispositif suivant la revendication 5 ou 19, caractérisé en ce que les ouvertures de contact (010, 020) des cuves de sel fondu (B10, B20) sont disposées à une distance (1) de la mi-hauteur (h) des cuves de sel fondu (B10, B20), en ce que les cuves de sel fondu (B10, B20) peuvent tourner verticalement de 180° environ, et en ce que le niveau (N) des sels fondus (S1, S2) dans les cuves de sel fondu (B10, B20) est au moins à mi-hauteur (h), déduction faite de la distance (l), et au plus à mi-hauteur (h), déduction faite de cette distance (1).

21. Procédé pour faire fonctionner un dispositif suivant l'une des revendications précédentes, notamment suivant la revendication 10 ou 20, caractérisé en ce qu'après avoir effectué un procédé d'échange d'ions sur un corps en verre (GK), les sels fondus (S1, S2) utilisés à cet effet sont utilisés pour le procédé d'échange d'ions suivant sur un autre corps en verre.

EP 0 267 588 B1

FIG 1

FIG 2

12

# FIG 3

# FIG 4

# FIG 5

FIG 6

FIG 7